(19) Europäisches Patentamt
European Patent Office
Office européen des brevets

(11) **EP 3 446 421 B1**

(12) **FASCICULE DE BREVET EUROPEEN**

(45) Date de publication et mention de la délivrance du brevet:
**08.01.2020 Bulletin 2020/02**

(21) Numéro de dépôt: **17720706.5**

(22) Date de dépôt: **19.04.2017**

(51) Int Cl.:
*H04B 17/27* *(2015.01)*          *G01S 13/78* *(2006.01)*
*G01R 23/00* *(2006.01)*

(86) Numéro de dépôt international:
**PCT/EP2017/059243**

(87) Numéro de publication internationale:
**WO 2017/182498 (26.10.2017 Gazette 2017/43)**

(54) **PROCÉDÉ ET DISPOSITIF DE DÉTECTION DE MESSAGES 1090 ES ÉMIS PAR DES AÉRONEFS, SATELLITE COMPORTANT UN TEL DISPOSITIF DE DÉTECTION**

VERFAHREN UND VORRICHTUNG ZUR ERKENNUNG VON 1090-ES-NACHRICHTEN EINES FLUGZEUGS, SATELLIT MIT EINER DERARTIGEN ERKENNUNGSVORRICHTUNG

METHOD AND DEVICE FOR DETECTING 1090 ES MESSAGES EMITTED BY AIRCRAFT, SATELLITE COMPRISING SUCH A DETECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2016 FR 1653447**

(43) Date de publication de la demande:
**27.02.2019 Bulletin 2019/09**

(73) Titulaire: **Airbus Defence and Space SAS**
**31402 Toulouse Cedex 4 (FR)**

(72) Inventeurs:
• **PICARD, Mathieu**
**31402 Toulouse Cedex 4 (FR)**
• **ELFASSI, Adrien**
**31402 Toulouse Cedex 04 (FR)**

(74) Mandataire: **Ipside**
**6, Impasse Michel Labrousse**
**31100 Toulouse (FR)**

(56) Documents cités:
**CN-A- 104 539 567**

• **YASUNORI NOUDA ET AL: "A Mode S decoding scheme using equalization for multilateration systems", DIGITAL AVIONICS SYSTEMS CONFERENCE (DASC), 2011 IEEE/AIAA 30TH, IEEE, 16 octobre 2011 (2011-10-16), pages 4E4-1, XP032069286, DOI: 10.1109/DASC.2011.6095917 ISBN: 978-1-61284-797-9**
• **STEVENS M C ED - STEVENS M C: "Secondary Surveillance Radar", 1 janvier 1988 (1988-01-01), SECONDARY SURVEILLANCE RADAR, NORWOOD, ARTECH HOUSE, US, PAGE(S) 168 - 170, XP002154909, section 12.4**

**Description**

## DOMAINE TECHNIQUE

La présente invention appartient au domaine de la surveillance d'aéronefs. La présente invention concerne plus particulièrement la détection de messages Mode S en squitter étendu (« Mode S extended squitter » dans la littérature anglo-saxonne), dits « messages 1090 ES », émis par des aéronefs dans le contexte de systèmes de surveillance ADS-B (« Automatic Dépendent Surveillance-Broadcast » dans la littérature anglo-saxonne).

La présente invention trouve une application particulièrement avantageuse, bien que nullement limitative dans le cas où plusieurs messages Mode S d'aéronefs différents, dont un ou plusieurs messages 1090 ES, sont susceptibles d'être reçus simultanément.

## ÉTAT DE LA TECHNIQUE

Actuellement, les aéronefs émettent des messages Mode S qui sont reçus par des stations réceptrices au sol. Le nombre d'aéronefs susceptibles d'être présents, à un instant donné, dans la zone géographique desservie par une station réceptrice au sol est généralement assez limité. Par conséquent, la probabilité de collision entre messages Mode S émis par des aéronefs différents, c'est-à-dire la probabilité pour qu'au moins deux messages Mode S soient reçus en même temps par une station réceptrice au sol, est assez faible.

Cependant, il est envisagé de nos jours d'effectuer la réception de messages Mode S émis par des aéronefs, en particulier des messages 1090 ES, au moyen de satellites en orbite basse (« Low Earth Orbit » ou LEO dans la littérature anglo-saxonne) ou en orbite moyenne (« Medium Earth Orbit » ou MEO dans la littérature anglo-saxonne).

Du fait de son positionnement à une altitude élevée par rapport aux altitudes de vol des aéronefs, un tel satellite est adapté à desservir une zone géographique de dimensions beaucoup plus importantes que celles d'une zone géographique desservie par une station réceptrice au sol.

La zone géographique desservie par un satellite est donc susceptible d'être survolée, à un instant donné, par un nombre d'aéronefs beaucoup plus important qu'une zone géographique desservie par une station réceptrice au sol. Il en résulte que la probabilité de collision au niveau d'un satellite est supérieure à la probabilité de collision au niveau d'une station réceptrice au sol.

La probabilité de collision au niveau d'un satellite peut en outre être très élevée (de l'ordre de 50% ou davantage), et ce d'autant plus qu'un même aéronef est susceptible d'émettre un grand nombre de messages Mode S sur des intervalles de temps relativement courts. Par exemple, un même aéronef émet des messages 1090 ES de manière récurrente avec une période moyenne de 0.5 secondes (en pratique comprise entre 0.4 et 0.6 secondes), et les messages 1090 ES ne représentent qu'un type particulier des messages Mode S susceptibles d'être émis par des aéronefs.

La probabilité de collision étant généralement assez faible dans le cas d'une station réceptrice au sol, le protocole de communication Mode S n'a pas été conçu pour permettre de distinguer facilement des messages Mode S reçus en même temps, mais principalement pour permettre la détection et le décodage des messages Mode S avec des moyens à la fois simples et robustes, exploitant de simples mesures de puissance.

Toutefois, de tels moyens de détection et de décodage conventionnels ne permettent pas de détecter des messages Mode S dès lors qu'au moins deux messages Mode S sont reçus simultanément, et ne sont donc pas adaptés à la collecte de messages 1090 ES par un satellite, ou dans le cas d'une station réceptrice au sol desservant une zone géographique dense, comme par exemple un aéroport.

Le document YASUNORI NOUDA ET AL: "A Mode S decoding scheme using equalization for multilateration systems",DIGITAL AVIONICS SYSTEMS CONFERENCE (DASC), 2011 IEEE/AIAA 30TH, IEEE, 16 octobre 2011, divulgue un procédé de détection de messages en squitter étendue.

## EXPOSÉ DE L'INVENTION

La présente invention a pour objectif de remédier à tout ou partie des limitations des solutions de l'art antérieur, notamment celles exposées ci-avant, en proposant une solution qui permette d'améliorer la capacité de détection d'un message 1090 ES en présence d'une collision avec un autre message Mode S, de type 1090 ES ou d'un autre type.

L'invention est définie par les revendications indépendantes. Les revendications dépendantes définissent des modes particuliers de réalisation de l'invention.

A cet effet, et selon un premier aspect, l'invention concerne un procédé de détection de messages Mode S en squitter étendu, dit « message 1090 ES », dans un signal global mesuré dans une bande de fréquences dans laquelle des messages 1090 ES sont émis par des aéronefs, comportant l'obtention, à partir du signal global, d'un signal comportant deux voies en quadrature de phase, dit « signal IQ », et la sélection d'une ou de plusieurs fréquences candidates pour la détection d'un message 1090 ES. Ledit procédé comporte en outre, pour chaque fréquence candidate :

- le recalage fréquentiel du signal IQ avec un signal de référence en fonction de la fréquence candidate considérée, ledit signal de référence comportant un préambule de message 1090 ES et un indicateur de format de message 1090 ES,
- la mesure de ressemblance entre le signal de référence et le signal IQ, de sorte à obtenir plusieurs valeurs d'un signal de ressemblance associées respectivement à différentes positions dudit signal de référence par rapport audit signal IQ pour la fréquence candidate considérée,

un message 1090 ES étant détecté lorsqu'une valeur du signal de ressemblance vérifie un critère prédéterminé de détection.

Ainsi, le procédé de détection repose notamment sur l'obtention d'un signal IQ à partir du signal global, c'est-à-dire une représentation complexe du signal global en amplitude et en phase. Grâce à un tel signal IQ, qui préserve l'information de phase du signal global là où les procédés de détection selon l'art antérieur ne conservaient que l'information d'amplitude/puissance, il est possible d'améliorer la détection d'un message 1090 ES en cas de collision avec un autre message Mode S, de type 1090 ES ou d'un autre type.

En particulier, il est alors possible d'exploiter la dimension fréquentielle pour distinguer des messages Mode S reçus en même temps. En effet, bien que les messages Mode S soient théoriquement tous émis sur la fréquence 1090 MHz, il s'avère en pratique que la fréquence réelle sur laquelle est reçu un message Mode S peut être différente de 1090 MHz et varier légèrement d'un message Mode S à un autre. Notamment, l'imprécision tolérée pour la génération de la fréquence 1090 MHz étant de l'ordre de $\pm$ 1 MHz, la fréquence réelle sur laquelle est émis un message Mode S est en pratique comprise entre 1089 MHz et 1091 MHz. En outre, la fréquence réelle sur laquelle un message Mode S est reçu peut, par effet Doppler, différer de la fréquence sur laquelle ledit message Mode S a été émis. En particulier, dans le cas où ce message Mode S est reçu par un satellite en orbite LEO, la variation fréquentielle introduite par effet Doppler peut être de l'ordre de $\pm$ 25 kHz.

Ces perturbations, à savoir l'imprécision sur la génération de la fréquence 1090 MHz et/ou l'effet Doppler deviennent cependant avantageuses dans un contexte de collisions dans la mesure où elles introduisent une diversité fréquentielle susceptible de permettre de distinguer des messages Mode S reçus en même temps. Il est par conséquent possible de considérer plusieurs fréquences candidates pour la détection d'un message 1090 ES, autour de leur fréquence 1090 MHz théorique d'émission.

La détection comporte alors, pour chaque fréquence candidate, le recalage fréquentiel du signal IQ avec un signal de référence, et la mesure de la ressemblance entre le signal de référence et le signal IQ, pour plusieurs positions dudit signal de référence par rapport audit signal IQ, de sorte à obtenir des valeurs d'un signal de ressemblance.

Le signal de référence reprend certains champs des messages Mode S tels que définis par le protocole de communication Mode S. En particulier, selon le protocole de communication Mode S, un message Mode S débute par un préambule et est suivi par un indicateur de format. Dans le protocole de communication Mode S, le préambule est constant et le même pour tous les messages Mode S, y compris pour les messages 1090 ES. Par contre, plusieurs formats sont possibles pour les messages Mode S, et un indicateur de format égal à 17 (DF17) indique que le format utilisé est celui des messages 1090 ES. Le signal de référence utilisé comporte le préambule et l'indicateur de format de message 1090 ES (DF17).

En présence d'un message 1090 ES dans le signal IQ, le signal de ressemblance comporte en principe un optimum local lorsque le signal de référence est synchronisé avec le début dudit message 1090 ES. On comprend donc qu'il est possible de détecter ce message 1090 ES à partir du signal de ressemblance.

Dans des modes particuliers de mise en œuvre, le procédé de détection de messages 1090 ES peut comporter en outre l'une ou plusieurs des caractéristiques suivantes, prises isolément ou selon toutes les combinaisons techniquement possibles.

Dans des modes particuliers de mise en œuvre, la sélection de fréquences candidates comporte l'analyse d'un spectre fréquentiel du signal IQ, une fréquence candidate correspondant à une fréquence pour laquelle la valeur du spectre fréquentiel du signal IQ vérifie un critère prédéterminé de détection.

Dans des modes particuliers de mise en œuvre, le procédé de détection de messages 1090 ES comporte le recalage en phase du signal IQ avec le signal de référence en fonction d'au moins une phase candidate pour la détection d'un message 1090 ES.

Dans des modes particuliers de mise en œuvre, les fréquences candidates sont des fréquences choisies arbitrairement et le signal de ressemblance correspond à une fonction sur un espace tridimensionnel dont les dimensions correspondent respectivement aux fréquences candidates, aux instants candidats et à des phases candidates.

Dans des modes particuliers de mise en œuvre, le procédé de détection de messages 1090 ES comporte l'extraction de bits inclus dans chaque message 1090 ES détecté.

Dans des modes particuliers de mise en œuvre, le procédé de détection de messages 1090 ES comporte, pour chaque message 1090 ES détecté, l'extraction d'un identifiant ICAO de l'aéronef ayant émis ledit message 1090 ES détecté, et les messages 1090 ES suivants émis par ledit aéronef sont détectés au moyen d'un signal de référence augmenté d'un identifiant d'émetteur égal à l'identifiant ICAO dudit aéronef.

De telles dispositions permettent d'améliorer la détection de messages 1090 ES émis par un aéronef pour lequel on a préalablement détecté un message 1090 ES. En effet, du fait que le signal de référence pour cet aéronef est plus long que lors de la détection initiale, un gain de traitement plus important sera introduit lors de la mesure de ressemblance.

Dans des modes particuliers de mise en œuvre, chaque message 1090 ES comportant des bits de données et des bits de détection d'erreur, l'extraction de bits d'un message 1090 ES détecté comporte une étape d'extraction initiale de bits et de calcul d'une valeur de confiance pour chaque bit de données extrait, et comporte en outre les étapes suivantes qui sont itérées jusqu'à ce qu'un critère prédéterminé d'arrêt soit vérifié :

- calcul, à partir des bits de données extraits, de bits de détection d'erreur théoriques,
- comparaison des bits de détection d'erreur théoriques avec les bits de détection d'erreur extraits du message 1090 ES détecté,
- lorsque les bits de détection d'erreur théoriques sont différents des bits de détection d'erreur extraits : modification d'au moins le bit extrait présentant la plus faible valeur de confiance parmi les bits extraits qui n'ont pas encore été modifiés.

Dans des modes particuliers de mise en œuvre, l'extraction des bits inclus dans chaque message 1090 ES détecté est réalisée de manière conjointe pour l'ensemble des messages 1090 ES détectés.

Dans des modes particuliers de mise en œuvre, chaque message 1090 ES comportant des bits de données et des bits de détection d'erreur, l'extraction de bits comporte les étapes suivantes qui sont itérées jusqu'à ce qu'un critère prédéterminé d'arrêt soit vérifié :

- extraction de bits pour chaque message 1090 ES détecté présent dans le signal IQ,
- calcul, pour chaque message 1090 ES, de bits de détection d'erreur théoriques à partir des bits de données extraits,
- comparaison, pour chaque message 1090 ES, des bits de détection d'erreur théoriques avec les bits de détection d'erreur extraits, les bits extraits pour un message 1090 ES étant considérés comme corrects lorsque les bits de détection d'erreur théoriques sont égaux aux bits de détection d'erreur extraits et comme erronés lorsque les bits de détection d'erreur théoriques sont différents des bits de détection d'erreur extraits,
- lorsque les bits extraits sont corrects pour au moins un message 1090 ES et erronés pour au moins un autre message 1090 ES :

    ◦ reformation de chaque message 1090 ES pour lequel les bits extraits sont corrects, à partir desdits bits extraits,
    ◦ suppression de chaque message 1090 ES reformé de sorte à obtenir un signal IQ dépourvu des messages 1090 ES pour lesquels les bits extraits sont corrects.

Selon un second aspect, la présente invention concerne un produit programme d'ordinateur comportant un ensemble d'instructions de code de programme qui, lorsqu'elles sont exécutées par un processeur, configurent ledit processeur pour mettre en œuvre un procédé de détection de messages 1090 ES selon l'un quelconque des modes de mise en œuvre de l'invention.

Selon un troisième aspect, la présente invention concerne un dispositif de détection de messages 1090 ES dans un signal global mesuré dans une bande de fréquences dans laquelle des messages 1090 ES sont émis par des aéronefs, comportant des moyens configurés pour mettre en œuvre les étapes d'un procédé de détection de messages 1090 ES selon l'un quelconque des modes de mise en œuvre de l'invention.

Selon un quatrième aspect, la présente invention concerne un satellite comportant un dispositif de mesure d'un signal global mesuré dans une bande de fréquences dans laquelle des messages 1090 ES sont émis par des aéronefs, et un dispositif de détection de messages 1090 ES l'un quelconque des modes de réalisation de l'invention.

Selon un cinquième aspect, la présente invention concerne un système de détection de messages 1090 ES, comportant un satellite comportant un dispositif de mesure d'un signal global mesuré dans une bande de fréquences dans laquelle des messages 1090 ES sont émis par des aéronefs, ledit système comportant en outre des moyens, répartis entre ledit satellite et une ou plusieurs stations de traitement au sol, configurés pour mettre en œuvre les étapes d'un procédé de détection de messages 1090 ES selon l'un quelconque des modes de mise en œuvre de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un exemple de réalisation d'un système de détection de messages 1090 ES,
- Figure 2 : un diagramme illustrant les principales étapes d'un exemple de mise en œuvre d'un procédé de détection de messages 1090 ES,

- Figure 3 : une représentation temporelle d'un exemple de signal de référence pour la détection de messages 1090 ES,
- Figure 4 : un diagramme illustrant les principales étapes d'un premier mode particulier de mise en œuvre d'une étape d'extraction de bits de messages 1090 ES détectés,
- Figure 5 : un diagramme illustrant les principales étapes d'un second mode particulier de mise en œuvre d'une étape d'extraction de bits de messages 1090 ES détectés.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

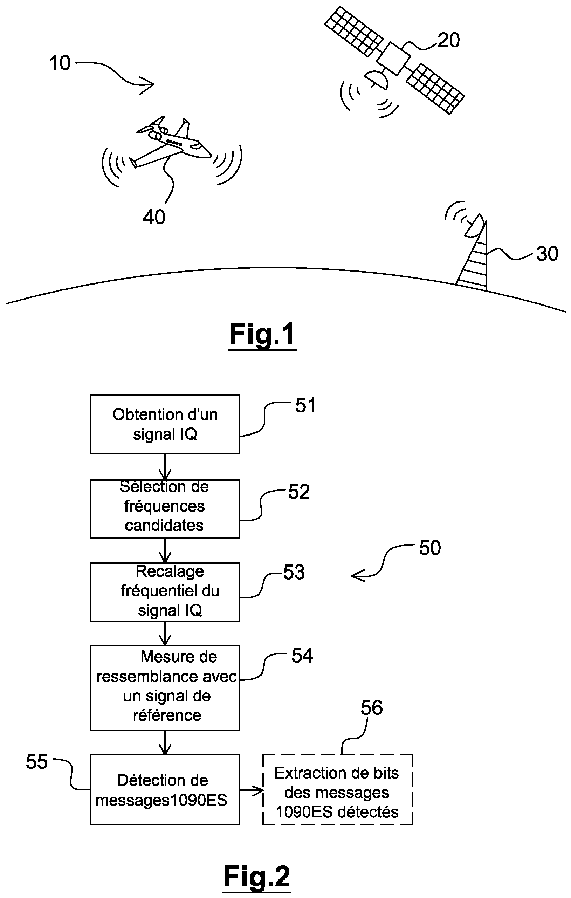

La figure 1 représente schématiquement un exemple de réalisation d'un système 10 de détection de messages 1090 ES émis par des aéronefs 40.

Tel qu'illustré par la figure 1, le système 10 de détection comporte au moins un satellite 20 et au moins une station 30 de traitement au sol. Le satellite 20 est de préférence placé sur une orbite non-géosynchrone, telle qu'une orbite LEO ou une orbite MEO.

Le satellite 20 comporte un dispositif de mesure (non représenté sur les figures) adapté à mesurer un signal global dans une bande de fréquences d'émission de messages 1090 ES par des aéronefs 40, c'est-à-dire une bande de fréquences comportant la fréquence 1090 MHz qui correspond à la fréquence théorique d'émission des messages 1090 ES par les aéronefs 40.

De manière générale, le système 10 de détection comporte des moyens, répartis entre ledit satellite 20 et une ou plusieurs stations 30 de traitement au sol, configurés pour mettre en œuvre les étapes d'un procédé 50 de détection de messages 1090 ES, qui sera décrit ci-après. En d'autres termes, suivant le mode de réalisation considéré :

- toutes les étapes du procédé 50 de détection sont mises en œuvre par le satellite 20, auquel cas la station 30 de traitement au sol se contente de recevoir dudit satellite 20 le résultat de la détection,
- toutes les étapes du procédé 50 de détection sont mises en œuvre par une ou plusieurs stations 30 de traitement au sol, auquel cas le satellite 20 se contente de transmettre à une station 30 de traitement au sol le signal global mesuré,
- le satellite 20 met en œuvre une partie des étapes du procédé 50 de détection, et la ou les étapes non mises en œuvre par le satellite 20 sont mises en œuvre par une ou plusieurs stations 30 de traitement au sol.

Dans la suite de la description, on se place de manière non limitative dans le cas où toutes les étapes du procédé 50 de détection sont mises en œuvre par un dispositif de détection (non représenté sur les figures) embarqué dans le satellite 20.

Le dispositif de détection comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 50 de détection de messages 1090 ES. Alternativement ou en complément, le dispositif de détection peut comporter un ou des circuits logiques programmables (FPGA, PLD, etc.), et/ou un ou des circuits intégrés spécialisés (ASIC), et/ou un ensemble de composants électroniques discrets, etc., adaptés à mettre en œuvre tout ou partie desdites étapes du procédé de détection de messages 1090 ES.

En d'autres termes, le dispositif de détection est configuré de façon logicielle (produit programme d'ordinateur spécifique) et/ou matérielle (FPGA, PLD, ASIC, composants électroniques discrets, etc.) pour mettre en œuvre les différentes étapes du procédé 50 de détection de messages 1090 ES.

La figure 2 représente les principales d'un exemple de mise en œuvre d'un procédé 50 de détection de messages 1090 ES.

Tel qu'illustré par la figure 2, le procédé 50 de détection comporte tout d'abord une étape 51 d'obtention, à partir du signal global, d'un signal comportant deux voies en quadrature de phase, dit « signal IQ », et une étape 52 de sélection d'une ou de plusieurs fréquences candidates pour la détection d'un message 1090 ES. Le procédé 50 de détection comporte ensuite, pour chaque fréquence candidate, des étapes de :

- 53 recalage fréquentiel du signal IQ avec un signal de référence en fonction de la fréquence candidate considérée,

- 54 mesure de ressemblance entre le signal de référence et le signal IQ de sorte à obtenir, pour la fréquence candidate considérée, plusieurs valeurs d'un signal de ressemblance associées respectivement à différentes positions dudit signal de référence par rapport audit signal IQ.

Le procédé 50 de détection de messages 1090 ES comporte également une étape 55 de détection d'un message 1090 ES lorsqu'une valeur du signal de ressemblance vérifie un critère prédéterminé de détection.

Il est à noter que le procédé 50 de détection peut se contenter de détecter les messages 1090 ES, sans extraire les bits inclus dans les messages 1090 ES détectés. Dans des modes préférés de mise en œuvre, et tel qu'illustré par la figure 2, le procédé 50 de détection peut cependant comporter une étape 56 d'extraction des bits inclus dans les messages 1090 ES détectés.

On décrit à présent des exemples non limitatifs de mise en œuvre des différentes étapes du procédé 50 de détection de messages 1090 ES.

## A) Etape 51 d'obtention de signal IQ

L'étape 51 d'obtention de signal IQ peut mettre en œuvre toute méthode connue de l'homme de l'art permettant d'obtenir deux voies I et Q en quadrature de phase. Le signal IQ est par exemple un signal dans lequel la fréquence 1090 MHz d'émission des messages 1090 ES a été ramenée sur une fréquence FO qui correspond à la fréquence nulle (bande de base) ou à une fréquence intermédiaire non nulle prédéterminée.

En considérant que K messages 1090 ES sont présents dans le signal global, reçus d'aéronefs différents, alors le signal IQ est de préférence un signal numérique qui peut par exemple être exprimé sous la forme suivante :

$$r[n] = \sum_{k=1}^{K} A_k \cdot s_k\left(\frac{n}{Fs} - \delta_k\right) \cdot e^{j\cdot\left(2\pi f_k \frac{n}{Fs} + \varphi_k\right)} + b[n] \qquad (1)$$

expression dans laquelle :

- Fs correspond à la fréquence d'échantillonnage du signal IQ,
- r[n] correspond au signal IQ à l'instant n/Fs,
- $S_k$ correspond au message 1090 ES reçu de l'aéronef de rang k, $1 \leq k \leq K$,
- $A_k$ correspond à l'amplitude du message 1090 ES $s_k$,
- $\delta_k$ correspond à l'instant de début de réception du message 1090 ES $s_k$,
- $f_k$ correspond à la fréquence réelle sur laquelle est reçu le message 1090 ES $s_k$, ramenée autour de la fréquence F0,
- $\varphi_k$ correspond à la phase du message 1090 ES $s_k$,
- b[n] correspond à un bruit de mesure à l'instant n/Fs, qui peut inclure des messages Mode S qui ne sont pas de type 1090 ES.

## B) Sélection 52 de fréquences candidates

L'étape 52 de sélection de fréquences candidates vise à sélectionner les fréquences sur lesquelles il va être vérifié si un message 1090 ES a été reçu, afin d'estimer les fréquences réelles $f_k$.

Suivant un premier exemple, l'étape 52 de sélection de fréquences candidates peut consister en un choix arbitraire de fréquences autour de la fréquence F0, par exemple espacées d'un pas fréquentiel ΔF prédéterminé.

Dans des modes préférés de mise en œuvre, l'étape 52 de sélection comporte l'analyse d'un spectre fréquentiel du signal IQ, et une fréquence candidate correspond à une fréquence pour laquelle la valeur du spectre fréquentiel du signal IQ vérifie un critère prédéterminé de détection. En d'autres termes, les fréquences candidates sont des fréquences qui, d'après le spectre fréquentiel du signal IQ, sont susceptibles de comporter un message Mode S, et donc susceptibles de comporter un message 1090 ES. En effet, une telle analyse spectrale ne permet pas de distinguer un message Mode S de type 1090 ES d'un message Mode S qui n'est pas de type 1090 ES.

Par exemple, le spectre fréquentiel du signal IQ, en une fréquence f, est calculé par une transformée de Fourier discrète du signal IQ :

$$D_{freq}[f] = \frac{1}{\sqrt{Ns}} \sum_{n=0}^{Ns-1} r[n] \cdot e^{-j2\pi f \frac{n}{Fs}} \qquad (2)$$

expression dans laquelle Ns correspond au nombre d'échantillons du signal IQ r[n], $0 \leq n \leq Ns-1$. On comprend cependant qu'il est possible de considérer, de manière plus générale, toute méthode de calcul d'un spectre fréquentiel connue de l'homme de l'art.

En considérant le spectre fréquentiel $D_{freq}$ donné par l'expression (2) ci-dessus, le critère prédéterminé de détection est par exemple vérifié, pour la fréquence $fe_k$, si la valeur $|D_{freq}[fe_k]|^2$ correspond à un maximum local et si :

$$|D_{freq}[fe_k]|^2 > L$$

expression dans laquelle L correspond à une valeur seuil positive prédéterminée. Si le critère prédéterminé de détection est vérifié pour la fréquence $fe_k$, alors cela signifie que le signal IQ est susceptible de comporter un message 1090 ES sur la fréquence $fe_k$ qui est sélectionnée comme fréquence candidate. Le cas échéant, la phase de la valeur $D_{freq}[fe_k]$ correspond à une estimation $\varphi e_k$ de la phase dudit message 1090 ES détecté, dite « phase candidate » dudit message 1090 ES détecté.

En pratique, le spectre fréquentiel $D_{freq}$ est de préférence calculé pour un ensemble de fréquences prédéterminées, dites « fréquences d'analyse ». Le cas échéant, une fréquence candidate sélectionnée correspond à l'une des fréquences d'analyse. Il est cependant possible, dans des modes particuliers de mise en œuvre, d'effectuer une interpolation du spectre fréquentiel $|D_{freq}|^2$ au voisinage d'une fréquence d'analyse ayant permis de vérifier le critère prédéterminé de détection. De telles dispositions permettent d'améliorer la précision de la sélection des fréquences candidates. L'interpolation du spectre fréquentiel $|D_{freq}|^2$ repose par exemple sur une fonction polynomiale d'ordre 2.

C) Etape 53 de recalage fréquentiel

Pour chaque fréquence candidate sélectionnée, le procédé 50 de détection comporte alors une étape 53 au cours de laquelle le signal IQ est recalé en fréquences avec un signal de référence, en fonction de la fréquence candidate considérée. Par « recalage fréquentiel », on entend que le signal IQ et le signal de référence sont ramenés sur la même fréquence.

Dans la suite de la description, on se place de manière non limitative dans le cas où le recalage fréquentiel, pour une fréquence candidate $fe_k$, correspond à ramener en bande de base un message 1090 ES reçu sur ladite fréquence candidate $fe_k$, c'est-à-dire à ramener ledit message 1090 ES sur la fréquence nulle. Pour la fréquence candidate $fe_k$, le signal IQ est par exemple recalé en fréquences selon l'expression suivante :

$$re_k[n] = r[n] \cdot e^{-j2\pi fe_k \frac{n}{Fs}} \qquad (3)$$

De préférence, si l'étape 52 de sélection de fréquences candidates a également fourni une phase candidate $\varphi e_k$ du message 1090 ES détecté sur la fréquence candidate $fe_k$, le signal IQ est recalé selon l'expression suivante

$$re_k[n] = r[n] \cdot e^{-j \cdot \left( 2\pi fe_k \frac{n}{Fs} + \varphi e_k \right)} \qquad (4)$$

En d'autres termes, le signal IQ est également recalé en phase avec le signal de référence en fonction de la phase candidate $\varphi e_k$.

De manière plus générale, si les phases candidates n'ont pas été obtenues au cours de l'étape 52 de sélection de fréquences candidates, par exemple du fait que les fréquences candidates sont des fréquences choisies arbitrairement autour de la fréquence F0, il est possible de considérer plusieurs phases candidates pour chaque fréquence candidate, et de déterminer plusieurs signaux IQ recalés en phase pour chaque fréquence candidate, en fonction des différentes phases candidates sélectionnées.

D) Etape 54 de mesure de ressemblance avec le signal de référence

Après recalage fréquentiel en fonction d'une fréquence candidate, on mesure la ressemblance entre un signal de référence et le signal IQ, pour plusieurs positions dudit signal de référence par rapport audit signal IQ. Lesdites positions correspondent respectivement à plusieurs instants candidats pour la détection d'un message 1090 ES dans le signal IQ.

Le protocole de communication Mode S définit plusieurs champs à l'intérieur d'un message Mode S. En particulier, selon le protocole de communication Mode S, un message Mode S débute par un préambule et est suivi par un indicateur de format (« Downlink Format » ou DF).

Dans le protocole de communication Mode S, le préambule est constant et le même pour tous les messages Mode S, y compris pour les messages 1090 ES.

Par contre, plusieurs formats sont possibles pour les messages Mode S, et la durée d'un message Mode S et l'interprétation des champs présents dans un message Mode S peuvent dépendre du format utilisé. L'indicateur de format permet donc de connaître la durée dudit message Mode S qui, suivant le format utilisé, peut comporter 56 microsecondes ($\mu$s) ou 112 $\mu$s d'informations après le préambule, ce qui correspond à respectivement 56 bits ou 112 bits. L'indicateur de format permet également de savoir comment interpréter les bits extraits des différents champs du message Mode S.

Dans le cas d'un message 1090 ES, l'indicateur de format est égal à 17 (DF17) et ledit message 1090 ES comporte 112 $\mu$s d'informations après le préambule, c'est-à-dire 112 bits.

Le tableau ci-après donne les différents champs d'un message 1090 ES (format DF17), tels que définis par le protocole de communication Mode S, selon leur ordre d'apparition dans un message 1090 ES.

| Champ | préambule | DF | CA/AF | AA | ME | PI |
|---|---|---|---|---|---|---|
| **Durée / Bits** | 8 $\mu$s | 5 bits | 3 bits | 24 bits | 56 bits | 24 bits |

Ainsi, un message 1090 ES comporte, après le préambule, un champ DF de 5 bits qui correspond à l'indicateur de format, égal à 17 (DF17) dans le cas d'un message 1090 ES.

Un message 1090 ES comporte ensuite :

- un champ CA/AF de 3 bits, utilisé pour transmettre des informations de contrôle complémentaires,
- un champ AA de 24 bits, qui comporte un identifiant d'émetteur du message 1090 ES, qui correspond à l'identifiant ICAO (« International Civil Aviation Organization ») de l'aéronef 40 qui émet le message 1090 ES,
- un champ ME de 56 bits qui comporte des informations relatives notamment à la position ou à l'altitude de l'aéronef 40 qui émet le message 1090 ES,
- un champ PI de 24 bits, qui comporte des bits de détection d'erreur permettant de détecter, lors de l'extraction, des erreurs dans les 88 bits de données extraits correspondant aux bits des champs DF, CA/AF, AA et ME.

Le signal de référence correspond au début d'un message 1090 ES, et comporte, outre le préambule, un indicateur de format de message 1090 ES, c'est-à-dire un indicateur de format égal à 17 (DF17).

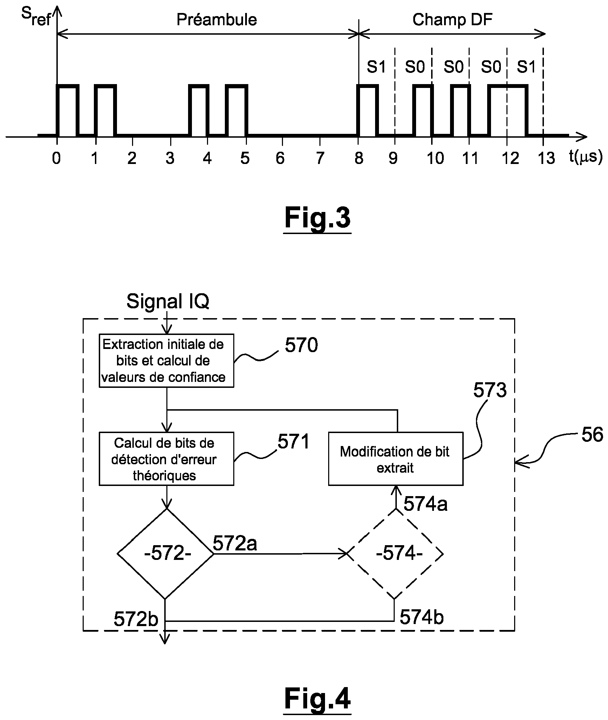

La figure 3 représente schématiquement le signal de référence en bande de base.

Tel qu'illustré par la figure 3, le préambule tel que défini par le protocole de communication Mode S comporte 4 impulsions carrées, chacune de durée 0.5 $\mu$s, qui débutent respectivement à 0 $\mu$s, 1 $\mu$s, 3.5 $\mu$s et 4.5 $\mu$s.

Selon le protocole de communication Mode S, chaque bit est encodé par un symbole de durée Ts égale à 1 $\mu$s. Si le bit est égal à 0, on émet un symbole SO qui est nul sur la première moitié de la durée Ts, constant et positif sur la seconde moitié de la durée Ts. Si le bit est égal à 1, on émet un symbole S1 qui est positif et constant sur la première moitié de la durée Ts, nul sur la seconde moitié de la durée Ts.

Tel qu'illustré sur la figure 3, le signal de référence comporte, après le préambule, un indicateur de format égal à 17, c'est-à-dire correspondant à la séquence de bits « 1 0 0 0 1 » qui est encodée par la séquence de symboles « S1 SO SO SO S1 ».

Avec un tel signal de référence, on comprend que, si le signal IQ comporte un message 1090 ES qui débute à un instant candidat $\delta e_k$, le signal de ressemblance doit comporter un optimum local lorsque le signal de référence est positionné audit instant candidat $\delta e_k$, puisque le signal IQ doit, sur la durée dudit signal de référence, ressembler audit signal de référence.

Il est à noter que toute fonction permettant de mesurer la ressemblance entre deux signaux différents, comportant chacun plusieurs échantillons, peut être mise en œuvre au cours de l'étape 54 de mesure de ressemblance. Dans la suite de description, on se place dans le cas où la mesure de ressemblance comporte une corrélation entre le signal de référence et le signal IQ, qui est calculée pour plusieurs positions du signal de référence par rapport au signal IQ, c'est-à-dire pour plusieurs instants candidats.

On se place tout d'abord dans le cas où le signal IQ $re_k$ est recalé à la fois en fréquence et en phase en fonction d'une fréquence candidate et d'une phase candidate, selon l'expression (4) ci-dessus, par exemple suite à la détection de fréquences candidates par analyse spectrale du signal IQ. Dans un tel cas, le signal de ressemblance $D_{timing}$, pour une fréquence candidate $fe_k$ et un instant candidat $5e_k$, est par exemple calculé selon l'expression suivante :

$$D_{timing, fe_k, \varphi e_k}(\delta e_k) = real\left(\sum_{m=0}^{M-1} re_k[m + \delta e_k] \cdot s_{ref}[m]\right) \qquad (5)$$

expression dans laquelle real(x) correspond à la valeur réelle du nombre complexe x, et M correspond au nombre d'échantillons du signal de référence $S_{ref}$. Si l'on désigne par OSF le facteur de sur-échantillonnage par rapport à la durée Ts (1 μs), c'est-à-dire le nombre d'échantillons que comporte le signal IQ par durée Ts, alors le nombre d'échantillons M du signal de référence $s_{ref}$, de durée égale à (8 + 5) μs, est égal à 13·OSF.

Dans le cas, par exemple, où les fréquences candidates sont des fréquences choisies arbitrairement sans analyse spectrale du signal IQ, alors il est possible de considérer, pour chaque fréquence candidate, plusieurs phases candidates possibles. Dans un tel cas, le signal IQ $re_k$ recalé est par exemple donné par l'expression (3) ci-dessus, et le signal de ressemblance $D_{timing}$ comporte, pour chaque fréquence candidate $fe_k$ et chaque instant candidat $\delta e_k$ considéré, plusieurs valeurs associées respectivement à différentes phases candidates $\varphi e_k$, calculées par exemple selon l'expression suivante :

$$D_{timing}(fe_k, \delta e_k, \varphi e_k) = real\left(\sum_{m=0}^{M-1} re_k[m + \delta e_k] \cdot s_{ref}[m] \cdot e^{-j\varphi e_k}\right) \qquad (6)$$

Dans certains cas, il est possible de considérer un signal de référence plus long que le signal de référence illustré par la figure 3. En particulier, certains champs ne varient pas d'un message 1090 ES à un autre émis par un même aéronef 40. C'est le cas du champ AA qui comporte l'identifiant ICAO de l'aéronef 40 qui a émis le message 1090 ES, l'identifiant ICAO d'un aéronef 40 étant un identifiant unique et permanent dudit aéronef 40. Par conséquent, il est possible, dans des modes préférés de mise en œuvre, pour un aéronef 40 donné pour lequel on a préalablement détecté un message 1090 ES et extrait l'identifiant ICAO dudit message 1090 ES détecté, de rajouter au signal de référence un champ AA égal à l'identifiant ICAO dudit aéronef 40 pour la détection des messages 1090 ES suivants émis par cet aéronef 40. Le cas échéant, le champ CA/AF, entre le champ DF et le champ AA, est par exemple forcé à zéro. Le champ AA comportant 24 bits, il est possible d'améliorer fortement le gain de traitement introduit par la mesure de ressemblance lors de la détection des messages 1090 ES suivants émis par cet aéronef 40.

E) Etape 55 de détection de message 1090 ES

Ainsi, à l'issue de l'étape 54 de mesure de ressemblance, on dispose de valeurs de signal de ressemblance associées aux différentes fréquences candidates, et pour chaque fréquence candidate, aux différents instants candidats et, le cas échéant, aux différentes phases candidates.

Au cours de l'étape 55 de détection de message 1090 ES, on évalue les différentes valeurs du signal de ressemblance, et un message 1090 ES est détecté lorsqu'une valeur du signal de ressemblance vérifie un critère prédéterminé de détection.

Dans le cas où une analyse spectrale du signal IQ a été effectuée au cours de l'étape 52 de sélection de fréquences candidates, on vérifie, pour chaque fréquence candidate susceptible de comporter un message 1090 ES, si la valeur du signal de ressemblance pour l'un des instants candidats permet de confirmer la détection d'un message 1090 ES pour la fréquence candidate considérée. Par exemple, dans le cas de l'expression (5), le critère de détection est considéré comme vérifié par la valeur du signal de ressemblance à un instant candidat $\delta e_k$ si ladite valeur correspond à un maximum local du signal de ressemblance suivant la dimension des instants candidats, et si en outre ladite valeur est supérieure à une valeur seuil prédéterminée. Lorsque le critère de détection est vérifié pour une valeur du signal de ressemblance, les paramètres de détection du message 1090 ES détecté, c'est-à-dire les estimations de la fréquence, de la phase et de l'instant de réception dudit message 1090 ES, correspondent à :

- la fréquence candidate et à la phase candidate, déterminées au cours de l'étape 53 de sélection, associées à la valeur dudit signal de ressemblance pour laquelle le critère de détection a été vérifié,

- l'instant candidat associé à la valeur dudit signal de ressemblance pour laquelle le critère de détection a été vérifié.

Dans le cas où les fréquences candidates sont choisies arbitrairement, et dans le cas où plusieurs phases candidates sont considérées, le signal de ressemblance, par exemple donné par l'expression (6) ci-dessus, correspond à une fonction sur un espace tridimensionnel dont les dimensions correspondent respectivement aux fréquences candidates, aux phases candidates et aux instants candidats. Par exemple, dans le cas de l'expression (6), le critère de détection est considéré comme vérifié par une valeur du signal de ressemblance pour un triplet donné (fréquence candidate, phase candidate, instant candidat) si ladite valeur correspond à un maximum local du signal de ressemblance, et si en outre ladite valeur est supérieure à une valeur seuil prédéterminée. La détection de maximum local du signal de ressemblance met par exemple en œuvre des méthodes conventionnelles de traitement de volume (par exemple filtres d'ordre, analyse différentielle (laplacien, hessien), etc.). Lorsque le critère de détection est vérifié pour une valeur du signal de ressemblance, le triplet associé donne les différents paramètres de détection du message 1090 ES détecté, c'est-à-dire des estimations de la fréquence, de la phase et de l'instant de réception dudit message 1090 ES.

Ainsi, à l'issue de l'étape 55 de détection, un ou plusieurs messages 1090 ES peuvent avoir été détectés et, pour chaque message 1090 ES détecté, on peut également estimer un triplet de paramètres de détection correspondant à des estimations de la fréquence, de la phase et de l'instant de réception dudit message 1090 ES détecté.

F) Etape 56 d'extraction de bits de données

L'étape 56 d'extraction vise à extraire les bits des messages 1090 ES détectés, c'est-à-dire à décoder chacun des messages 1090 ES détectés.

Plusieurs méthodes d'extraction des bits des messages 1090 ES détectés peuvent être envisagées, et on comprend que le choix d'une méthode d'extraction particulière ne constitue qu'une variante d'implémentation de l'invention. Notamment, il est possible soit d'extraire séparément les bits des différents messages 1090 ES détectés, soit d'extraire conjointement lesdits bits des messages 1090 ES détectés.

F.1) Extraction séparée des bits des messages 1090 ES détectés

Tel qu'indiqué ci-dessus, à l'issue de l'étape 55 de détection, on dispose, pour chaque message 1090 ES détecté, d'un triplet de paramètres de détection qui correspondent à des estimations de la fréquence, de la phase et de l'instant de réception dudit message 1090 ES détecté.

Pour chaque message 1090 ES détecté, il est donc possible de calculer un signal IQ recalé en fréquence et en phase, à l'intérieur duquel on connaît l'instant de début du préambule du message 1090 ES détecté et les instants de transitions entre symboles.

Pour extraire les bits du message 1090 ES détecté de rang k, pour lequel le triplet de paramètres de détection est $(fd_k, \varphi d_k, \delta d_k)$, on calcule par exemple un signal d'extraction selon l'expression suivante :

$$r_k[n] = \text{real}\left( r[n] \cdot e^{-j \cdot \left( 2\pi fd_k \frac{n}{Fs} + \varphi d_k \right)} \right)$$

Les premiers échantillons des différents symboles du message 1090 ES détecté correspondent aux échantillons $r_k[\delta' d_k + m\text{-}OSF]$, m étant un entier positif ou nul, expression dans laquelle $\delta' d_k$ correspond au début du champ DF du message 1090 ES détecté, égal à $(\delta d_k + 8 \cdot OSF)$. Pour extraire les différents bits, il est par exemple possible de corréler les échantillons du signal d'extraction $r_k$, qui correspondent à un même symbole, avec les symboles S0 et S1 décrits en référence à la figure 3. Par exemple, il est possible de calculer, pour chaque symbole du signal d'extraction $r_k$, des valeurs $C0_k$ et $C1_k$ selon les expressions suivantes :

$$C0_k(m) = \sum_{i=0}^{OSF-1} r_k[\delta' d_k + m \cdot OSF + i] \cdot S0[i] = \sum_{i=OSF/2}^{OSF-1} r_k[\delta' d_k + m \cdot OSF + i] \cdot S0[i]$$

$$C1_k(m) = \sum_{i=0}^{OSF-1} r_k\big[\delta' d_k + m \cdot OSF + i\big] \cdot S1[i] = \sum_{i=0}^{OSF/2-1} r_k\big[\delta' d_k + m \cdot OSF + i\big] \cdot S1[i]$$

Par conséquent, si $C0_k(m)$ est supérieur à $C1_k(m)$ alors le symbole de rang m est considéré comme étant un symbole S0, de sorte qu'un bit égal à 0 est extrait. Dans le cas contraire ($C1_k(m) > C0_k(m)$), le symbole de rang m est considéré comme étant un symbole S1, de sorte qu'un bit égal à 1 est extrait.

Les valeurs $C0_k(m)$ et $C1_k(m)$ peuvent également être utilisées pour calculer une valeur de confiance $Vc_k(m)$ pour le bit extrait pour le symbole de rang m. Par exemple, une telle valeur de confiance $Vc_k(m)$ peut être calculée selon l'expression suivante :

$$Vc_k(m) = |C0_k(m) - C1_k(m)|$$

D'autres méthodes d'extraction séparée de bits peuvent être cependant mises en œuvre, et on comprend que le choix d'une méthode particulière ne constitue qu'une variante d'implémentation de l'invention.

F.2) Extraction conjointe des bits des messages 1090 ES détectés

Dans des modes particuliers de mise en œuvre, l'extraction des bits inclus dans chaque message 1090 ES détecté est réalisée de manière conjointe pour l'ensemble des messages 1090 ES détectés, par exemple par une estimation au sens du maximum de vraisemblance (« Joint Maximum Likelihood Sequence Estimation » ou JMLSE dans la littérature anglo-saxonne) ou une estimation au sens des moindres carrés, etc.

En effet, à l'issue de l'étape 55 de détection, on dispose du nombre de messages 1090 ES présents dans le signal IQ, mais également des différents paramètres de détection pour chaque message 1090 ES détecté. En estimant par ailleurs, selon toute méthode connue de l'homme de l'art, l'amplitude de chaque message 1090 ES détecté, il est alors possible de calculer un signal IQ théorique pour chaque combinaison possible de séquences de bits possibles pour les différents messages 1090 ES détectés. La combinaison de séquences de bits pour les messages 1090 ES détectés qui permet de maximiser la vraisemblance, ou de minimiser l'écart quadratique moyen entre le signal IQ théorique et le signal IQ obtenu à partir du signal global, donne alors directement tous les bits de tous les messages 1090 ES détectés.

F.3) Amélioration des performances de l'extraction de bits

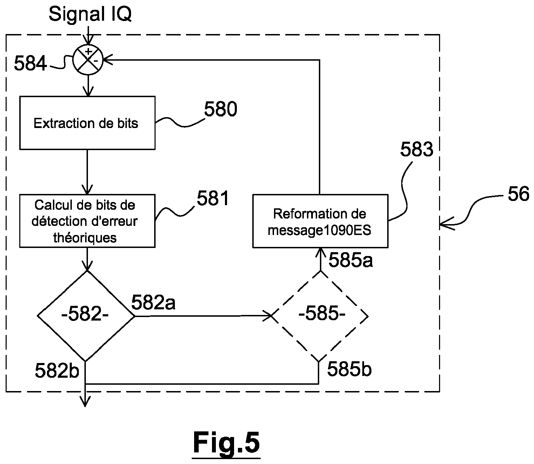

On décrit ci-après, en référence aux figures 4 et 5, deux exemples de méthodes permettant d'améliorer les performances de l'extraction, qui peuvent être considérées seules ou en combinaison. Ces méthodes s'appuient notamment sur le fait que chaque message 1090 ES comporte des bits de données et des bits de détection d'erreur (« Cyclic Redundancy Check » ou CRC dans la littérature anglo-saxonne).

La figure 4 représente schématiquement les principales étapes d'un mode préféré de mise en œuvre de l'étape 56 d'extraction de bits des messages 1090 ES détectés, qui s'appuie notamment sur le calcul de valeurs de confiance associées respectivement aux différents bits extraits.

Tel qu'illustré par la figure 4, l'extraction de bits comporte tout d'abord, pour chaque message 1090 ES détecté, une étape 570 d'extraction initiale de bits, au cours de laquelle on calcule des valeurs de confiance associées respectivement aux différents bits extraits. L'extraction de bits comporte ensuite, pour chaque message 1090 ES détecté, les étapes suivantes qui sont itérées jusqu'à ce qu'un critère prédéterminé d'arrêt soit vérifié :

- 571 calcul, à partir des bits de données extraits, de bits de détection d'erreur théoriques,
- 572 comparaison des bits de détection d'erreur théoriques avec les bits de détection d'erreur extraits du message 1090 ES détecté,
- lorsque les bits de détection d'erreur théoriques sont différents des bits de détection d'erreur extraits : 573 modification d'au moins le bit extrait présentant la plus faible valeur de confiance parmi les bits extraits qui n'ont pas encore été modifiés.

L'étape 571 est conventionnelle et vise à calculer des bits de détection d'erreur théoriques à partir des bits de données extraits au niveau du dispositif de détection, selon la même méthode de calcul que celle utilisée à l'émission pour calculer les bits de détection d'erreur inclus dans le message 1090 ES.

Les bits de détection d'erreur théoriques sont ensuite comparés avec les bits de détection d'erreur extraits du message 1090 ES détecté, au cours de l'étape 572 de comparaison.

Lorsque les bits de détection d'erreur théoriques sont différents des bits de détection d'erreur extraits du message 1090 ES détecté considéré (référence 572a sur la figure 4), cela signifie qu'au moins un bit extrait (bit de données ou bit de détection d'erreurs) est erroné. Le cas échéant, la plus faible valeur de confiance calculée est en principe associée au bit extrait qui a le plus de chances d'être celui qui est erroné. En modifiant la valeur du bit extrait ayant la valeur de confiance la plus faible (étape 573 de modification), il est alors possible de calculer à nouveau de bits de détection d'erreur théoriques (étape 571 de calcul) à partir des bits de données extraits, et de les comparer aux bits de détection d'erreur extraits (étape 572 de comparaison) afin de vérifier si cette modification a permis de supprimer les erreurs. Si tel n'est pas le cas, il est possible de modifier la valeur du bit extrait non encore modifié ayant la valeur de confiance la plus faible, et ainsi de suite jusqu'à ce que ce que le critère d'arrêt soit vérifié.

Lorsque, au cours de l'étape 572 de comparaison, les bits de détection d'erreur théoriques sont égaux aux bits de détection d'erreur extraits du message 1090 ES détecté (référence 572b sur la figure 4), alors les bits extraits sont considérés comme corrects, et le critère d'arrêt est considéré comme vérifié. Dans un tel cas, les bits de données extraits correspondent à ceux, obtenus éventuellement après modification d'un ou de plusieurs desdits bits de données extraits, ayant permis d'obtenir des bits de détection d'erreur théoriques égaux aux bits de détection d'erreur extraits.

De préférence, le critère d'arrêt comporte également un nombre maximal de modifications autorisées, ledit nombre maximal de modifications autorisées étant par exemple inférieur à quinze. Ainsi, dans l'exemple non limitatif illustré par la figure 4, l'étape 56 d'extraction de bits comporte une étape 574 de détermination si le nombre de bits modifiés a atteint le nombre maximal de modifications autorisées. Si c'est le cas (référence 574b sur la figure 4), le critère d'arrêt est vérifié et l'extraction des bits prend fin même s'il est considéré que les bits extraits comportent encore des erreurs. Si le nombre de bits modifiés n'a pas encore atteint le nombre maximal de modifications autorisées (référence 574a sur la figure 4), alors la valeur du bit non encore modifié ayant la valeur de confiance la plus faible est modifiée, et ainsi de suite jusqu'à ce que ce que le critère d'arrêt soit vérifié.

La figure 5 représente schématiquement les principales étapes d'un autre mode préféré de mise en œuvre de l'étape 56 d'extraction de bits des messages 1090 ES détectés.

Tel qu'illustré par la figure 5, l'extraction de bits comporte les étapes suivantes qui sont itérées jusqu'à ce qu'un critère prédéterminé d'arrêt soit vérifié :

- 580 extraction de bits de données et de bits de détection d'erreur pour chaque message 1090 ES détecté présent dans le signal IQ,
- 581 calcul, pour chaque message 1090 ES, de bits de détection d'erreur théoriques à partir des bits de données extraits,
- 582 comparaison, pour chaque message 1090 ES, des bits de détection d'erreur théoriques avec les bits de détection d'erreur extraits,
- lorsque les bits extraits sont corrects pour au moins un message 1090 ES et erronés pour au moins un autre message 1090 ES :

  ◦ 583 reformation de chaque message 1090 ES pour lequel les bits extraits sont corrects, à partir desdits bits extraits,
  ◦ 584 suppression de chaque message 1090 ES reformé de sorte à obtenir un signal IQ dépourvu des messages 1090 ES pour lesquels les bits extraits étaient corrects.

Au cours de l'étape 580, on extrait les bits de données et les bits de détection d'erreur de chaque message 1090 ES détecté présent dans le signal IQ. Au cours de la première itération, tous les messages 1090 ES détectés sont encore présents dans le signal IQ. Par contre, au cours d'une seconde itération, le signal IQ ne comporte plus tous les messages 1090 ES initialement détectés, puisqu'un ou plusieurs messages 1090 ES ont été supprimés du signal IQ. Par conséquent, à partir de la seconde itération et pour toutes les éventuelles itérations suivantes, l'étape 580 ne porte que sur l'extraction des bits inclus dans les messages 1090 ES initialement détectés qui n'ont pas encore été reformés et supprimés dans le signal IQ.

Pour chaque message 1090 ES dont les bits ont été extraits, des bits de détection d'erreur théoriques sont calculés (étape 581 de calcul), à partir des bits de données extraits au niveau du dispositif de détection, et lesdits bits de détection d'erreur théoriques sont comparés (étape 582 de comparaison) avec les bits de détection d'erreur extraits pour le message 1090 ES considéré.

Lorsque les bits extraits sont corrects pour au moins un message 1090 ES et erronés pour au moins un autre message 1090 ES (référence 582a sur la figure 5), alors chaque message 1090 ES pour lequel les bits extraits sont corrects est reformé (étape 583 de reformation), par le dispositif de détection, selon le protocole de communication 1090 ES. La reformation du message 1090 ES tient compte en outre des différents paramètres de détection obtenus pour ce message 1090 ES, afin d'obtenir un message 1090 ES reformé qui correspond au message 1090 ES tel qu'il apparaît théoriquement dans le signal IQ, compte tenu des bits extraits et des différents paramètres de détection. Chaque message 1090 ES reformé est ensuite soustrait (étape 584 de suppression) au signal IQ. Le signal IQ ainsi obtenu, théoriquement dépourvu des messages 1090 ES pour lesquels les bits extraits étaient corrects, est ensuite utilisé pour itérer à nouveau les étapes décrites ci-dessus.

Lorsque les bits extraits sont corrects pour tous les messages 1090 ES initialement détectés dans le signal IQ (référence 582b sur la figure 5), le critère d'arrêt est alors considéré comme vérifié.

De préférence, le critère d'arrêt comporte également un nombre maximal d'itérations autorisées, par exemple inférieur à quinze. Ainsi, dans l'exemple non limitatif illustré par la figure 5, l'étape 56 d'extraction de bits comporte une étape 585 de détermination si le nombre d'itérations effectuées, c'est-à-dire le nombre de suppressions successives de messages 1090 ES reformés, a atteint le nombre maximal d'itérations autorisées. Si c'est le cas (référence 585b sur la figure 5), le critère d'arrêt est vérifié et l'extraction des bits prend fin même s'il est considéré que les bits extraits comportent encore des erreurs pour certains messages 1090 ES initialement détectés. Si le nombre d'itérations effectuées n'a pas encore atteint le nombre maximal d'itérations autorisées (référence 585a sur la figure 5), alors il est possible de reformer et de supprimer des messages 1090 ES si les bits extraits sont corrects pour au moins un message 1090 ES détecté et erronés pour au moins un autre message 1090 ES détecté.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant principalement un système de détection de messages 1090 ES comportant au moins un satellite.

Rien n'exclut, suivant d'autres exemples, d'avoir un système de détection dépourvu de satellites et d'intégrer, dans une station réceptrice au sol, un dispositif de détection de messages 1090 ES selon l'un quelconque des modes de réalisation de l'invention. En effet, l'invention trouve également une application particulièrement avantageuse dans le cas d'une station réceptrice au sol desservant une zone géographique dense, comme par exemple un aéroport, pour laquelle la probabilité de collision entre messages 1090 ES peut également être importante.

Il est également possible, suivant d'autres exemples, d'avoir un système de détection comportant à la fois un ou plusieurs satellites, pour la réception de messages 1090 ES depuis une orbite terrestre, et une ou plusieurs stations réceptrices au sol, pour la réception de messages 1090 ES au sol sans avoir à passer par l'un des satellites, intégrant un dispositif de détection selon l'un quelconque des modes de réalisation de l'invention.

## Revendications

**1.** Procédé (50) de détection de messages Mode S en squitter étendu, dit « message 1090 ES », dans un signal global mesuré dans une bande de fréquences dans laquelle des messages 1090 ES sont émis par des aéronefs (40), ledit procédé comportant l'obtention (51), à partir du signal global, d'un signal comportant deux voies en quadrature de phase, dit « signal IQ », et la sélection (52) d'une ou de plusieurs fréquences candidates pour la détection d'un message 1090 ES, ledit procédé comportant en outre, pour chaque fréquence candidate :

- le recalage fréquentiel (53) du signal IQ avec un signal de référence en fonction de la fréquence candidate considérée, ledit signal de référence comportant un préambule de message 1090 ES et un indicateur de format de message 1090 ES,
- la mesure de ressemblance (54) entre le signal de référence et le signal IQ, de sorte à obtenir plusieurs valeurs d'un signal de ressemblance associées respectivement à différentes positions dudit signal de référence par rapport audit signal IQ pour la fréquence candidate considérée,

un message 1090 ES étant détecté (55) lorsqu'une valeur du signal de ressemblance vérifie un critère prédéterminé de détection, et ledit procédé (50) comporte, pour chaque message 1090 ES détecté, l'extraction d'un identifiant ICAO de l'aéronef (40) ayant émis ledit message 1090 ES détecté, les messages 1090 ES suivants émis par ledit aéronef étant détectés au moyen d'un signal de référence augmenté d'un identifiant d'émetteur égal à l'identifiant ICAO dudit aéronef.

**2.** Procédé (50) selon la revendication 1, dans lequel la sélection (52) de fréquences candidates comporte l'analyse d'un spectre fréquentiel du signal IQ, une fréquence candidate correspondant à une fréquence pour laquelle la valeur du spectre fréquentiel du signal IQ vérifie un critère prédéterminé de détection.

**3.** Procédé (50) selon l'une des revendications précédentes, comportant le recalage en phase du signal IQ avec le signal de référence en fonction d'au moins une phase candidate pour la détection d'un message 1090 ES.

**4.** Procédé (50) selon la revendication 1, dans lequel les fréquences candidates sont des fréquences choisies arbitrairement et le signal de ressemblance correspond à une fonction sur un espace tridimensionnel dont les dimensions correspondent respectivement aux fréquences candidates, aux instants candidats et à des phases candidates pour la détection d'un message Mode S.

**5.** Procédé (50) selon l'une des revendications précédentes, comportant l'extraction (56) de bits inclus dans chaque message 1090 ES détecté, et dans lequel, chaque message 1090 ES comportant des bits de données et des bits de détection d'erreur, l'extraction de bits d'un message 1090 ES détecté comporte une étape (570) d'extraction initiale de bits et de calcul d'une valeur de confiance pour chaque bit de données extrait, et comporte en outre les étapes suivantes qui sont itérées jusqu'à ce qu'un critère prédéterminé d'arrêt soit vérifié :

- (571) calcul, à partir des bits de données extraits, de bits de détection d'erreur théoriques,
- (572) comparaison des bits de détection d'erreur théoriques avec les bits de détection d'erreur extraits du message 1090 ES détecté,
- lorsque les bits de détection d'erreur théoriques sont différents des bits de détection d'erreur extraits : (573) modification d'au moins le bit extrait présentant la plus faible valeur de confiance parmi les bits extraits qui n'ont pas encore été modifiés.

**6.** Procédé (50) selon l'une des revendications précédentes, comportant l'extraction (56) de bits inclus dans chaque message 1090 ES détecté, et dans lequel, chaque message 1090 ES comportant des bits de données et des bits de détection d'erreur, l'extraction de bits comporte les étapes suivantes qui sont itérées jusqu'à ce qu'un critère prédéterminé d'arrêt soit vérifié :

- (580) extraction de bits pour chaque message 1090 ES détecté présent dans le signal IQ,
- (581) calcul, pour chaque message 1090 ES, de bits de détection d'erreur théoriques à partir des bits de données extraits,
- (582) comparaison, pour chaque message 1090 ES, des bits de détection d'erreur théoriques avec les bits de détection d'erreur extraits, les bits extraits pour un message 1090 ES étant considérés comme corrects lorsque les bits de détection d'erreur théoriques sont égaux aux bits de détection d'erreur extraits et comme erronés lorsque les bits de détection d'erreur théoriques sont différents des bits de détection d'erreur extraits,
- lorsque les bits extraits sont corrects pour au moins un message 1090 ES et erronés pour au moins un autre message 1090 ES :

  ◦ (583) reformation de chaque message 1090 ES pour lequel les bits extraits sont corrects, à partir desdits bits extraits,
  ◦ (584) suppression de chaque message 1090 ES reformé de sorte à obtenir un signal IQ dépourvu des messages 1090 ES pour lesquels les bits extraits sont corrects.

**7.** Produit programme d'ordinateur **caractérisé en ce qu'**il comporte un ensemble d'instructions de code de programme qui, lorsqu'elles sont exécutées par un processeur, configurent ledit processeur pour mettre en œuvre un procédé (50) de détection de messages 1090 ES selon l'une des revendications précédentes.

**8.** Dispositif de détection de messages 1090 ES dans un signal global mesuré dans une bande de fréquences dans laquelle des messages 1090 ES sont émis par des aéronefs (40), **caractérisé en ce qu'**il comporte des moyens configurés pour mettre en œuvre les étapes d'un procédé (50) de détection selon l'une des revendications 1 à 6.

**9.** Satellite (20) comportant un dispositif de mesure d'un signal global mesuré dans une bande de fréquences dans laquelle des messages 1090 ES sont émis par des aéronefs (40), **caractérisé en ce qu'**il comporte un dispositif de détection de messages 1090 ES selon la revendication 8.

**10.** Système (10) de détection de messages 1090 ES, comportant un satellite (20) comportant un dispositif de mesure d'un signal global mesuré dans une bande de fréquences dans laquelle des messages 1090 ES sont émis par des aéronefs (40), **caractérisé en ce que** ledit système comporte des moyens, répartis entre ledit satellite (20) et une ou plusieurs stations (30) de traitement au sol, configurés pour mettre en œuvre les étapes d'un procédé (50) de détection selon l'une des revendications 1 à 6.

**Patentansprüche**

1. Verfahren (50) zum Erkennen von Mode S-Nachrichten mit erweitertem Squitter, die als "1090 ES-Nachricht" bezeichnet werden, in einem Gesamtsignal, das in einem Frequenzband gemessen wird, in dem 1090 ES-Nachrichten von Luftfahrzeugen (40) gesendet werden, wobei das Verfahren das Erhalten (51) eines zwei Kanäle in Phasenquadratur umfassenden Signals, das als "IQ-Signal" bezeichnet wird, auf Grundlage des Gesamtsignals, und das Auswählen (52) von einer oder mehreren Kandidatenfrequenzen für das Erkennen einer 1090 ES-Nachricht umfasst, wobei das Verfahren für jede Kandidatenfrequenz weiter umfasst:

   - die Frequenzabstimmung (53) des IQ-Signals mit einem Referenzsignal in Abhängigkeit von der betreffenden Kandidatenfrequenz, wobei das Referenzsignal eine 1090 ES-Nachrichtenpräambel und einen 1090 ES-Nachrichtenformat-Indikator umfasst,
   - die Ähnlichkeitsmessung (54) zwischen dem Referenzsignal und dem IQ-Signal, um mehrere Werte eines Ähnlichkeitssignals zu erhalten, die jeweils unterschiedlichen Positionen des Referenzsignals in Bezug auf das IQ-Signal für die betreffende Kandidatenfrequenz zugeordnet sind,

   wobei eine 1090 ES-Nachricht erkannt (55) wird, wenn ein Wert des Ähnlichkeitssignals ein vorbestimmtes Erkennungskriterium erfüllt, und das Verfahren (50) für jede erkannte 1090 ES-Nachricht das Extrahieren einer ICAO-Kennung des Luftfahrzeugs (40) umfasst, das die erkannte 1090 ES-Nachricht gesendet hat, wobei die nachfolgenden 1090 ES-Nachrichten, die von dem Luftfahrzeug gesendet werden, mittels eines Referenzsignals erkannt werden, das um eine Senderkennung erweitert ist, die gleich der ICAO-Kennung des Luftfahrzeugs ist.

2. Verfahren (50) nach Anspruch 1, wobei das Auswählen (52) von Kandidatenfrequenzen die Analyse eines Frequenzspektrums des IQ-Signals umfasst, wobei eine Kandidatenfrequenz einer Frequenz entspricht, bei der der Wert des Frequenzspektrums des IQ-Signals ein vorbestimmtes Erkennungskriterium erfüllt.

3. Verfahren (50) nach einem der vorstehenden Ansprüche, das die Phasenabstimmung des IQ-Signals mit dem Referenzsignal in Abhängigkeit von mindestens einer Kandidatenphase für die Erkennung einer 1090 ES-Nachricht umfasst.

4. Verfahren (50) nach Anspruch 1, wobei die Kandidatenfrequenzen willkürlich ausgewählte Frequenzen sind, und das Ähnlichkeitssignal einer Funktion in einem dreidimensionalen Raum entspricht, dessen Dimensionen jeweils den Kandidatenfrequenzen, den Kandidatenzeitpunkten und Kandidatenphasen für die Erkennung einer Mode S-Nachricht entsprechen.

5. Verfahren (50) nach einem der vorstehenden Ansprüche, das das Extrahieren (56) von Bits umfasst, die in jeder erkannten 1090 ES-Nachricht eingeschlossen sind, und wobei, wenn jede 1090 ES-Nachricht Datenbits und Fehlererkennungsbits umfasst, das Extrahieren von Bits aus einer erkannten 1090 ES-Nachricht einen anfänglichen Schritt (570) des Extrahierens von Bits und des Berechnens eines Konfidenzwerts für jedes extrahierte Datenbit umfasst, und weiter die folgenden Schritte umfasst, die wiederholt werden, bis ein vorbestimmtes Stoppkriterium erfüllt ist:

   - (571) Berechnen von theoretischen Fehlererkennungsbits auf Grundlage der extrahierten Datenbits,
   - (572) Vergleichen der theoretischen Fehlererkennungsbits mit den Fehlererkennungsbits, die aus der erkannten 1090 ES-Nachricht extrahiert wurden,
   - wenn sich die theoretischen Fehlererkennungsbits von den extrahierten Fehlererkennungsbits unterscheiden: (573) Modifizieren von mindestens dem extrahierten Bit, das den niedrigsten Konfidenzwert unter den extrahierten Bits aufweist, die noch nicht modifiziert wurden.

6. Verfahren (50) nach einem der vorstehenden Ansprüche, das das Extrahieren (56) von Bits umfasst, die in jeder erkannten 1090 ES-Nachricht eingeschlossen sind, und wobei, wenn jede 1090 ES-Nachricht Datenbits und Fehlererkennungsbits umfasst, das Extrahieren von Bits die folgenden Schritte umfasst, die wiederholt werden, bis ein vorbestimmtes Stoppkriterium erfüllt ist:

   - (580) Extrahieren von Bits für jede erkannte 1090 ES-Nachricht, die im IQ-Signal vorliegt,
   - (581) Berechnen von theoretischen Fehlererkennungsbits für jede 1090 ES-Nachricht auf Grundlage der extrahierten Datenbits,
   - (582) Vergleichen der theoretischen Fehlererkennungsbits für jede 1090 ES-Nachricht mit den extrahierten Fehlererkennungsbits, wobei die extrahierten Bits für eine 1090 ES-Nachricht als richtig erachtet werden, wenn die theoretischen Fehlererkennungsbits gleich den extrahierten Fehlererkennungsbits sind, und als falsch, wenn sich die theoretischen Fehlererkennungsbits von den extrahierten Fehlererkennungsbits unterscheiden,
- wenn die extrahierten Bits für mindestens eine 1090 ES-Nachricht richtig und für mindestens eine andere 1090 ES-Nachricht falsch sind:

- (583) Neubildung jeder 1090 ES-Nachricht, für die die extrahierten Bits richtig sind, auf Grundlage der extrahierten Bits,
- (584) Löschen jeder neugebildeten 1090 ES-Nachricht, um ein IQ-Signal ohne 1090 ES-Nachrichten zu erhalten, für die die extrahierten Bits richtig sind.

7. Computerprogrammprodukt, **dadurch gekennzeichnet, dass** es einen Satz von Programmcodeanweisungen umfasst, die, wenn sie von einem Prozessor ausgeführt werden, den Prozessor dafür konfigurieren, ein Verfahren (50) zum Erkennen von 1090 ES-Nachrichten nach einem der vorstehenden Ansprüche zu implementieren.

8. Vorrichtung zum Erkennen von 1090 ES-Nachrichten in einem Gesamtsignal, das in einem Frequenzband gemessen wird, in dem 1090 ES-Nachrichten von Luftfahrzeugen (40) gesendet werden, **dadurch gekennzeichnet, dass** sie Mittel umfasst, die dafür konfiguriert sind, die Schritte eines Erkennungsverfahrens (50) nach einem der Ansprüche 1 bis 6 zu implementieren.

9. Satellit (20), der eine Vorrichtung zum Messen eines Gesamtsignals umfasst, das in einem Frequenzband gemessen wird, in dem 1090 ES-Nachrichten von Luftfahrzeugen (40) gesendet werden, **dadurch gekennzeichnet, dass** er eine Vorrichtung zum Erkennen von 1090 ES-Nachrichten nach Anspruch 8 umfasst.

10. System (10) zum Erkennen von 1090 ES-Nachrichten, das einen Satelliten (20) umfasst, der eine Vorrichtung zum Messen eines Gesamtsignals umfasst, das in einem Frequenzband gemessen wird, in dem 1090 ES-Nachrichten von Luftfahrzeugen (40) gesendet werden, **dadurch gekennzeichnet, dass** das System zwischen dem Satelliten (20) und einer oder mehreren Verarbeitungsstationen (30) am Boden verteilte Mittel umfasst, die dafür konfiguriert sind, die Schritte eines Erkennungsverfahrens (50) nach einem der Ansprüche 1 bis 6 zu implementieren.

**Claims**

1. Method (50) for detecting Mode S messages in extended squitter, referred to as "1090 ES message", in a global signal measured in a frequency band in which 1090 ES messages are emitted by aircraft (40), said method comprising the obtaining (51), from the global signal, of a signal comprising two channels in phase quadrature, referred to as "IQ signal", and the selection (52) of one or several candidate frequencies for the detection of a 1090 ES message, said method further comprising, for each candidate frequency:

- the frequency realignment (53) of the IQ signal with a reference signal according to the candidate frequency considered, said reference signal comprising a 1090 ES message preamble and a 1090 ES message format indicator,
- the measurement of resemblance (54) between the reference signal and the IQ signal, so as to obtain several values of a resemblance signal respectively associated with different positions of said reference signal with respect to said IQ signal for the candidate frequency considered, a 1090 ES message being detected (55) when a value of the resemblance signal satisfies a predetermined detection criterion, and said method (50) comprises, for each 1090 ES message detected, the extraction of an ICAO identifier of the aircraft (40) having emitted said detected 1090 ES message, the following 1090 ES messages emitted by said aircraft being detected by means of a reference signal augmented with an emitter identifier equal to the ICAO identifier of said aircraft.

2. Method (50) according to claim 1, wherein the selection (52) of candidate frequencies comprises the analysis of a frequency spectrum of the IQ signal, a candidate frequency corresponding to a frequency for which the value of the frequency spectrum of the IQ signal satisfies a predetermined detection criterion.

3. Method (50) according to one of the preceding claims, comprising the realignment in phase of the IQ signal with the reference signal according to at least one candidate phase for the detection of a 1090 ES message.

4. Method (50) according to claim 1, wherein the candidate frequencies are arbitrarily chosen frequencies and the resemblance signal corresponds to a function on a three-dimensional space of which the dimensions correspond respectively to the candidate frequencies, to the candidate instants and to candidate phases for the detection of a Mode S message.

5. Method (50) according to one of the preceding claims, comprising the extraction (56) of bits included in each 1090 ES message detected, and wherein, each 1090 ES message comprising data bits and error detection bits, the extraction of bits from a detected 1090 ES message comprises a step (570) of initial extraction of bits and of calculating a confidence value for each data bit extracted, and further comprises the following steps which are iterated until a predetermined stop criterion is satisfied:

- (571) calculation, using the extracted data bits, of theoretical error detection bits,
- (572) comparison of the theoretical error detection bits with the error detection bits extracted from the detected 1090 ES message,
- when the theoretical error detection bits are different from the extracted error detection bits: (573) modification of at least the bit extracted that has the lowest confidence value from among the extracted bits that have not yet been modified.

6. Method (50) according to one of the preceding claims, comprising the extraction (56) of bits included in each 1090 ES message detected, and wherein, each 1090 ES message comprising data bits and error detection bits, the extraction of bits comprises the following steps that are iterated until a predetermined stop criterion is satisfied:

- (580) extraction of bits for each 1090 ES message detected present in the IQ signal,
- (581) calculation, for each 1090 ES message, of theoretical error detection bits from extracted data bits,
- (582) comparison, for each 1090 ES message, of theoretical error detection bits with the extracted error detection bits, with the extracted bits for a 1090 ES message being considered as correct when the theoretical error detection bits are equal to the extracted error detection bits and as erroneous when the theoretical error detection bits are different from the extracted error detection bits,
- when the extracted bits are correct for at least one 1090 ES message and erroneous for at least one other 1090 ES message:

-- (583) reformation of each 1090 ES message for which the extracted bits are correct, using said extracted bits,
- (584) suppression of each reformed 1090 ES message in such a way as to obtain an IQ signal devoid of the 1090 ES messages for which the extracted bits are correct.

7. Computer program product **characterised in that** it comprises a set of program code instructions that, when they are executed by a processor, configure said processor to implement a method (50) for detecting 1090 ES messages according to one of the preceding claims.

8. Device for detecting 1090 ES messages in a global signal measured in a frequency band in which 1090 ES messages are emitted by aircraft (40), **characterised in that** it comprises means configured to implement the steps of a method (50) for detecting according to one of claims 1 to 6.

9. Satellite (20) comprising a device for measuring a global signal measured in a frequency band in which 1090 ES messages are emitted by aircraft (40), **characterised in that** it comprises a device for detecting 1090 ES messages according to claim 8.

10. System (10) for detecting 1090 ES messages, comprising a satellite (20) that comprises a device for measuring a global signal measured in a frequency band wherein 1090 ES messages are emitted by aircraft (40), **characterised in that** said system comprises means, distributed between said satellite (20) and one or several ground processing stations (30), configured to implement the steps of a method (50) of detecting according to one of claims 1 to 6.

## Fig.1

| |
|---|
| Obtention d'un signal IQ — 51 |
| Sélection de fréquences candidates — 52 |
| Recalage fréquentiel du signal IQ — 53 |
| Mesure de ressemblance avec un signal de référence — 54 |
| 55 — Détection de messages1090ES |
| 56 Extraction de bits des messages 1090ES détectés |

50

## Fig.2

**Fig.3**

**Fig.4**

Signal IQ

584 — ⊗ (+/−)

Extraction de bits | 580

Calcul de bits de détection d'erreur théoriques | 581

Reformation de message1090ES | 583

56

-582- | 582a

-585- | 585a

582b | 585b

**Fig.5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A Mode S decoding scheme using equalization for multilateration systems. **YASUNORI NOUDA et al.** DIGITAL AVIONICS SYSTEMS CONFERENCE (DASC), 2011 IEEE/AIAA 30TH. IEEE, 16 Octobre 2011